Europäisches Patentamt

**(19)** European Patent Office

Office européen des brevets

**(11)** Publication number : **0 338 512 B1**

**(12)** EUROPEAN PATENT SPECIFICATION

**(45)** Date of publication of patent specification :
21.09.94 Bulletin 94/38

**(51)** Int. Cl.⁵ : **H02J 7/14,** H02P 9/08,
H02K 7/18, F02N 11/04

**(21)** Application number : **89106938.7**

**(22)** Date of filing : **18.04.89**

**(54) Engine driven generator.**

**(30)** Priority : **19.04.88 JP 94553/88**

**(43)** Date of publication of application :
**25.10.89 Bulletin 89/43**

**(45)** Publication of the grant of the patent :
**21.09.94 Bulletin 94/38**

**(84)** Designated Contracting States :
**DE FR GB**

**(56)** References cited :
EP-A- 0 260 176
PATENT ABSTRACTS OF JAPAN, vol. 10, no.
179 (E-414)(2235), 24th June 1986; JP-A-61 026
500 (HITACHI) 05.02.1986

**(73)** Proprietor : **Shinko Electric Co. Ltd.**
**12-2, Nihonbashi 3-chome**
**Chuo-ku Tokyo 103 (JP)**

**(72)** Inventor : **Takakado, Yuzo c/o Toyohashi**
**Factory of**
**Shinko Electric Co., Ltd.**
**150, Aza-Motoyashiki**
**Miya-cho Toyohashi-shi Aichi-ken 441-31 (JP)**

**(74)** Representative : **Goddar, Heinz J., Dr. et al**
**FORRESTER & BOEHMERT**
**Franz-Joseph-Strasse 38**
**D-80801 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an engine driven generator having a synchronous generator to be used as an engine starter when the engine is actuated, as known from EP-A1-0 260 176.

It is an object of the present invention to provide an engine driven generator suitable for supplying an ac load with electrical power from an inverter or the generator.

According to the invention, this object is solved by the features of claim 1. Subject matter of the subclaims are preferred embodiments of the invention.

The above and other objects, features and advantages of the present invention will become more apparent from the following description taken in conjunction with the accompanying drawing.

Fig. 1 is a circuit diagram of an engine driven generator according to a first embodiment of the present invention;

Fig. 2 is a control circuit in the circuit diagram of Fig. 1;

Fig. 3 is a control power supply in the control circuit of Fig. 2;

Fig. 4 is a circuit diagram illustrating starting completion detector in the control circuit of Fig. 2;

Fig. 5 is a block diagram showing a second drive unit in the control circuit of Fig. 2;

Fig. 6 is a voltage waveform appeared in output terminals of an inverter circuit in the circuit diagram of Fig. 1;

Fig. 7 is a time chart of operation of U-W phase transistors;

Fig. 8 is a circuit diagram of an engine driven generator according to a second embodiment of the present invention;

Fig. 9 is a view showing an operation characteristic of a chopper circuit according to the circuit diagram of Fig. 8;

Fig. 10 is a circuit diagram of an engine driven generator according to a third embodiment of the present invention;

Fig. 11 is a view showing an operation characteristic of a chopper circuit according to the circuit diagram of Fig. 10;

Fig. 12 is a circuit diagram of an engine driven generator according to a fourth embodiment of the present invention;

Fig. 13 is a circuit diagram of an engine driven generator according to a fifth embodiment of the present invention;

Fig. 14 is a block diagram showing a control circuit in the circuit diagram of Fig. 12; and

Fig. 15 is a block diagram showing a second drive unit in the control circuit of Fig. 13.

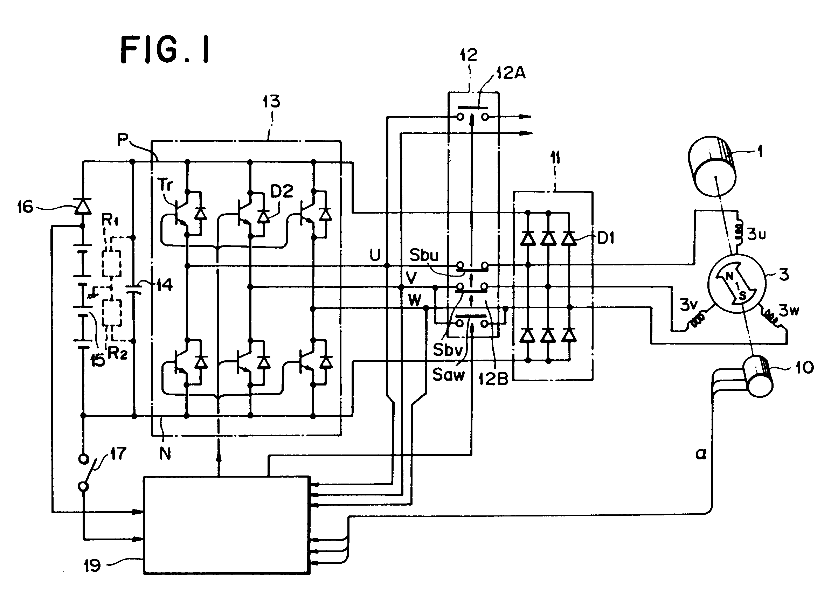

## First Embodiment (Figs. 1 to 7)

The first embodiment of the engine driven generator has an arrangement capable of producing a single-phase alternating current with use of the three-phase synchronous generator.

The engine driven generator of the first embodiment comprises an engine 1, a generator 3 (three-phase synchronous generator) connected to the engine 1 by a shaft, a rotor position detector 10 composed of for example, magnetic resistance element or a proximity switch of a search coil, having a characteristic to detect at least 120 magnetic pole electrical angle, and connected to the generator 3 by a shaft, a full-wave three-phase rectifier 11 composed of six diodes D1 made in bridge connection and having a rectified output to be supplied to a main circuit of a direct current/alternating current power converter 13 (voltage inverter to be controlled by three-phase PWM control, hence hereafter referred to simply as inverter) and input terminals of the rectifier 11 each connected to free ends of three wirings 3u, 3v, 3w of armatures of the generator 3, a switching unit 12 having a switch 12A and a switch 12B composed of normally open contact Saw, normally closed contacts Sbv, Sbu connected to the output terminals of the main circuit of the inverter 13 composed of six switching elements Tr and Diodes D2 connected in parallel and opposite polarity with the switching elements Tr, a capacitor 14 interposed between the P-N terminals of direct current sides, a direct current power supply 15 (battery Ba) connected between the direct current terminals P, N of the main cuicuit of the inverter 13 via a diode 16 for preventing the current from flowing back (hereafter referred to as backflow prevention diode), an actuation manual switch 17 connecting to the direct current power supply 15 at an end and a control circuit 19 (described later) at the other end, the control circuit 19 for controlling the main circuit of the inverter 13 for receiving output voltages u, v, w of the main circuit of the inverter 13 and output voltage E of the direct current power supply 15 as well as a detection signal α(αu, αv, αw) for carring out a function described later.

The rotor position detector 10 can be substituted by that of operation fixed type capable of obviating a shaft connection with the generator 3 for integrating the output voltage of the generator 3 to detect the magnetic pole position.

The switch 12A connect or disconnect the output terminals u, v of the main circuit of the inverter 13 to or from output terminals of loads (not shown) while the contacts Saw connect or disconnect the output terminal v to or from the output terminal w, and the conatct Sbu, Sbv connect or disconnect the output terminals u, v to or from input terminals corresponding thereto of the full-wave rectifier 11. The output terminal w and an input teminal corresponding thereto of the full-wave rectifier 11 are directly connected with each other.

The six switchig elements Tr of the main circuit of the inverter 13 have for example, U-phase transistors $T_{PU}$, $T_{NU}$, V-phase transistor $T_{PV}$, $T_{NV}$, and W-phase transistors $T_{PW}$, $T_{NW}$. The output terminals u, v, of the main circuit of the inverter 13 are connected with output terminals of the outer device via the switch 12A of the switching unit 12 while connected to the full-wave rectifier 11 via the switch 12B of the switching unit 12.

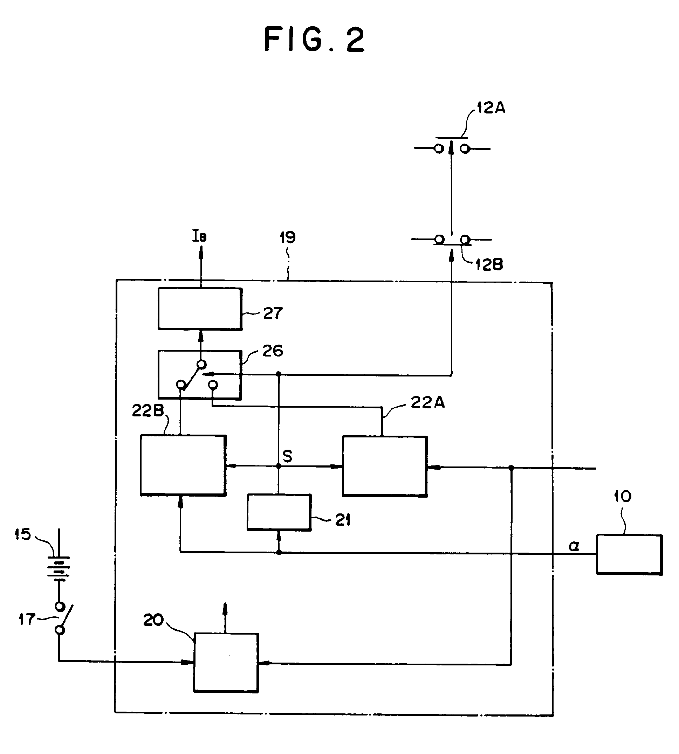

The control circuit 19 (Fig. 2) comprises a control power supply 20 for receiving a power of the direct current power supply 15 and produces a direct current power for control, an actuation completion detector 21 for receiving the output $\alpha$ of the rotor position detector 10 for producing and supplying a switching signal S to the switching unit 12, a first drive unit 22B for receiving the output $\alpha$ of the rotor position detector 10 in the case where the switching signal S is not supplied for detecting the relative position between the magnetic pole and the armature of the generator 3 and producing drive signal $I_B$ and supplying the drive signal $I_B$ to the transistors Tr of the main circuit of the inverter 13, and a second drive unit 22A for controlling the output voltage of the main circuit of the inverter 13 by feedbacking the output voltages U, V, W of the main circuit of the inverter 13 at the time when the actuation completion detector 21 produces the switching signal S.

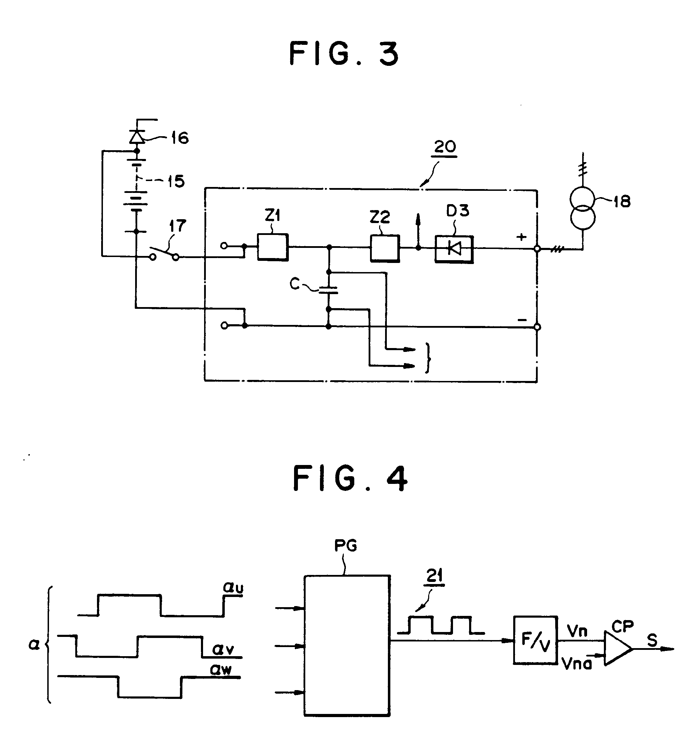

The control power supply 20 comprises a capacitance C, a voltage stabilizing elements Z1, Z2 respectively connected with each other and with the capacitance C, and a rectifier D3 connected to the voltage stabilizing element Z2 as illustrated in Fig. 3. The rotor position detector 10 receives a power from the control power supply 20. The actuation completion detector 21 comprises a pulse generator PG for generating six-times pulse on the basis of the output of the rotor position detector 10, a frequency/voltage converter (F/V converter) for generating voltage proportional to the speed of rotation of the generator 3, and a comparator CP for comparing the output vn of the F/V converter with a predetermined level vno (a value corresponding to the speed of rotation $N_o$) and detecting the switching signal S in the case where the output vn is greater than the predetermined level vno at the result of the comparison as illustrated in Fig. 4.

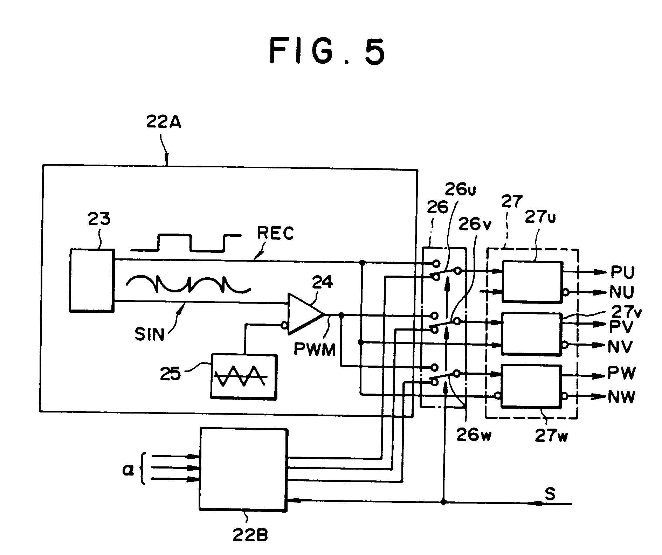

The second drive unit 22A has a signal generator 23 for receiving the three-phase output of the main circuit of the inverter 13 and producing a signal SIN which is a rectified voltage of a basic wave (sine wave) and has a positive maximum and a negative maximum successively alternating each half cycle and a square wave signal REC (H/L signal having a basic freqency) which is synchronous with the positive and negative waves of the signal SIN and becomes H-level each half cycle of the signal SIN as illustrated in Fig. 5. A comparator 24 receives the signal SIN (modulation wave) and a triangular wave signal (transmission signal) produced by a triangular wave generator 25 and compares them and produces a PWM signal.

Switching unit 26 as shown in Figs. 2 and 5 comprises U-phase switch 26u, V-phase switch 26v and W-phase switch 26w. The switches 26u, 26v, 26w connect the output of the first drive unit 22B to the U-phase driver 27u, the V-phase driver 27v and the W-phase driver 27w respectively of the drive unit 27 until the switching signal S is produced. Upon production of the switching signal S, the H/L (REC) signal is supplied to the U-phase driver 27u via the U-phase switch 26u so as to issue signals of PU, NU while the PWM signal is supplied to the V-phase driver 27v and the W-phase driver 27w via the V-phase switch 26v and the W-phase switch 26w so as to issue signals PV, NV and signals PW, NW. The signals PU, NU; PV, NV; PW, NW respectively constitute the drive signal $I_B$. The U-phase driver 27u, the V-phase driver 27v and the W-phase driver 27W respectively receive the H/L signal as ON/OFF signal so that each driver does not issue any signal in the case where the H/L signal is at an L level.

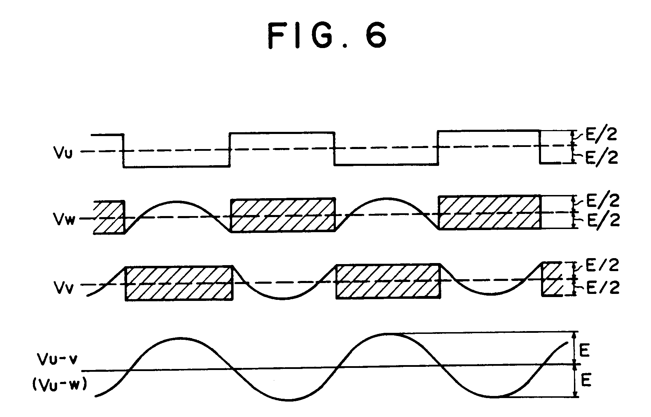

The waveforms showing voltages Vu, Vv, Vw (potentials at imaginary neutral point corresponding to a middle point of the serially connected resistors R1, R2 as shown in a broken line in Fig. 1) of the output terminals of the main circuit of the inverter 13 are illustrated in Fig. 6 in the case where the contact Saw of the switch 12A is closed while each of the switches 26u, 26v, 26w of the signal switching unit 26 is switched to the side of the first drive unit 22B. A waveform as denoted at Vu-V (=Vu-W) is the one at the maximum output of the line-to-line voltage between the outputs v, w which are short-circuited. Designated at E is an input voltage of the main circuit 13 of the inverter 13 and the hatched portion shows high impedance state.

With the arrangement of the engine driven generator, an operation of the engine driven generator will be described herewith.

First, the switching unit 12A and the contact Saw of the switch 12B are open while the contacts Sbu, Sbv of the switch 12B are closed so that output terminals u, v, w of the main circuit of the inverter 13 are connected to the armature windings 3u, 3v, 3w of the generator 3. The actuation switch 17 is turned on to supply the direct current power 15 to the main circuit of the inverter 13 while the main circuit of the inverter 13 receives a base signal $I_B$ supplied from the driver 27u, 27v, 27w on the basis of the signal produced by the first drive unit 22B and is actuated. The main circuit of the inverter 13 converts the direct current power of the direct current power source 15 to the three-phase alternating current voltages U, V, W having frequencies in synchronism with the speed of rotation N of the generator 3 and supplies it to the generator 3 whereby the generator 3 effects motor driving operation to actuate the engine 1. That is, the rotor position detector 10 and the main circuit of the inverter 13 correspond respectively to a brush and a commutator of DC motor and the generator 3 effects the motor driving operation to actuate the engine 1 as a starter.

The speed of rotation N of the generator 3 is increased with the lapse of time after actuation of the engine 1 and reaches the predetermined speed $N_o$. At that time, the engine 1 completes the actuation thereof and the actuation completion detector 21 of the control circuit 19 issues the switching signal S so that the switch 12A and the contact Saw of the switch 12B are closed while the contacts Sbu, Sbv of the switch 12B are open whereby the output terminals u, v are short-circuited and connected to the terminals (loads) of the outer device. At the same time the signal switching unit 26 is switched.

With the series of operations set forth above, the generator 3 starts to effect power generation operation. The voltage generated by the generator 3 is converted to direct current by the full-wave rectifier 11 and smoothed by the capacitor 14, the smoothed direct current power is supplied to the main circuit of the inverter 13. The main circuit of the inverter 13 effects inverting operation on the reception of the base drive signal $I_B$ supplied by the U-phase driver 27u, V-phase driver 27v, W-phase driver 27w on the basis of the signal produced by the second drive unit 22A, namely, by the H/L signal and the PWM signal. Since the U-phase driver 27u receives the H/L signal the transistors $T_{PU}$, $T_{NU}$ are turned on or off in synchronism with the H/L signal while the transistors $T_{PV}$, $T_{NV}$ effect PWM operation during the period of H-level of the H/L signal and rest at the other half cycle, and the transistors $T_{PW}$, $T_{NW}$ effect PWM operation during the period of L-level of the H/L signal and rest at the other half cycle. That is, a pair of the transistors $T_{PV}$, $T_{NV}$ and a pair of the transistors $T_{PW}$ and $T_{NW}$ are alternately driven each half cycle of the basic wave with time sharing.

A transistor dissipation is classfied generally to a normal dissipation L1 at an on-state and a transient dissipation (switching dissipation) L2 at the time of switching. During the PWM operation at several KHz the normal dissipation L1 and the transient dissipation L2 are in the ratio of 1:1. During the operation at a low frequency (at the time of operation of the U-phase transistors $T_{PU}$, $T_{PU}$) the normal dissipation L1 occupies substantially 100 % of the whole dissipation.

Assuming that the normal dissipation L1 is 1, the dissipation L of the V-phase transistors $T_{PV}$, $Y_{NV}$ and the W-phase transistors $T_{PW}$, $T_{NW}$ will be
L = ((L1 = 1) + (L2 = 1)) x operation hour 0.5 = 1
which is the same as the dissipation of the U-phase transistors $T_{PU}$, $T_{NU}$.

Assuming that no alternate time sharing operation is carried out to rest the transistors $T_{PW}$, $T_{NW}$ completely while U-phase transistors $T_{PU}$, $T_{NU}$ are driven by H/L signal and the V -phase transistors $T_{PV}$, $T_{NV}$ are successively subjected to the PWM operation, the dissipation of V-phase transistors $T_{PV}$, $T_{NV}$ will be
L = ((L1 = 1) + (L2 = 1)) x operation hour 1 = 2
which shows that the dissipation is two times of the present embodiment. Provided that the capacity of the transistors is same and assuming that the dissipation equals to ratio of load, then the relationship between three-phases, namely, U-phase : V-phase : W-phase = 1 : 2 : 0. As a result, a sharing of each phase transistor is not balanced while the relationship between three-phases according to the present embodiment is balanced, namely, U-phase : V-phase : W-phase = 1 : 1 : 1.

Hence, according to the present embodiment, assuming that the capacity of the main circuit of the inverter 13 is same, compared with the case where the transistor corresponding to one-phase rests, for example, in the case where the W-phase transistors $T_{PW}$, $T_{NW}$, rest completely, it is possible to supply a single-phase alternating current having output of two times. On the other hand, assuming that the output value of the single-phase alternating current is same, for example, compared with the case where the W-phase transistors $T_{PW}$, $T_{NW}$ rest completely the capacity of the main circuit of the inverter 13 will be reduced to half which results in allowing the device to be small sized.

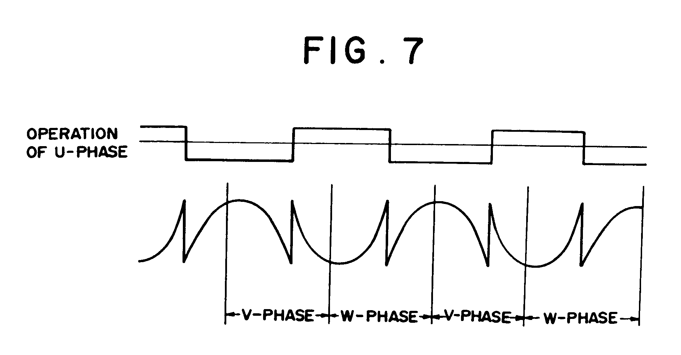

According to the present embodiment, although the ON/OFF timing of the U-phase transistors $T_{PU}$, $T_{NU}$ is synchronous with the operation switching timing of the transistors $T_{PV}$, $T_{NV}$ and the transistors $T_{PW}$, $T_{NW}$ the operations of the V-phase transistors $T_{PV}$, $T_{NV}$ and the W-phase transistors $T_{PW}$, $T_{NW}$ may be shifted relative to the operations of U-phase transistors $T_{PU}$, $T_{NU}$, as shown in Fig. 7.

Furthermore, according to the present embodiment the operations of V-phase transistors $T_{PV}$, $T_{NV}$, and the U-phase transistors $T_{PU}$, $T_{NU}$ are alternated with phase angle of 180° radian, but they may be alternated with phase angles of 45°, 90°, 120° radians which have same effect as that of the phase angle of 180° radian. Hence, V-phase transistors $T_{PV}$, $T_{NV}$ and the W-phase transistors $T_{PW}$, $T_{NW}$ may be alternately operated with substantially 50 percent of time sharing.

The backflow prevention diode 16 is provided for preventing the current from flowing back since the voltage of the capacitor 14 is automatically greater than that of the direct current power supply 15 after the actuation of the engine 1.

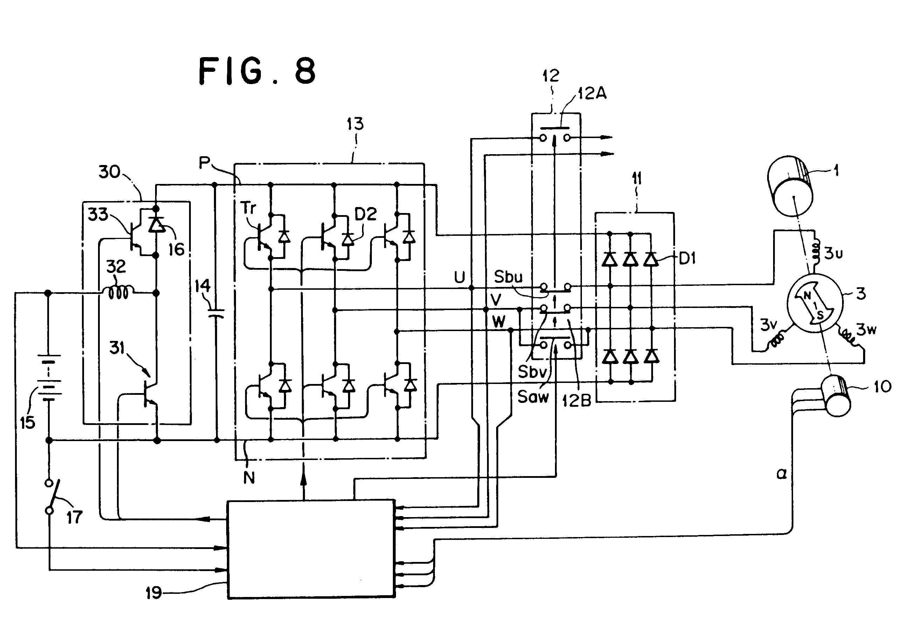

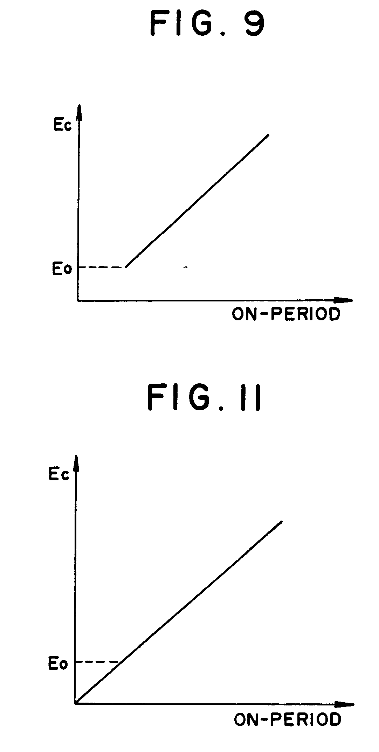

Second Embodiment (Figs. 8 and 9)

An engine driven generator according to the second embodiment of the present invention will described with referrence to Figs. 8 and 9.

The engine driven generator comprises a chopper circuit 30 for increasing the voltage of the direct current power supply 15 to be supplied to the main circuit of the inverter 3 in addition to the elements same as those of the first embodiment. The chopper circuit 30 has a chopper 31, a reactor 32, and a chopper controller (not shown) provided at the control circuit 19 for controlling the ON/OFF period where the direct current obtained by rectification of the output voltage of the main circuit of the inverter 13 is supplied to the chopper 31 as a feedback signal. The chopper circuit 30 has an operation characteristic as illustrated in Fig. 9. In Fig. 9 designated at Eo is the voltage of the direct current power supply 15, Ec is the voltage of the capacitor 14.

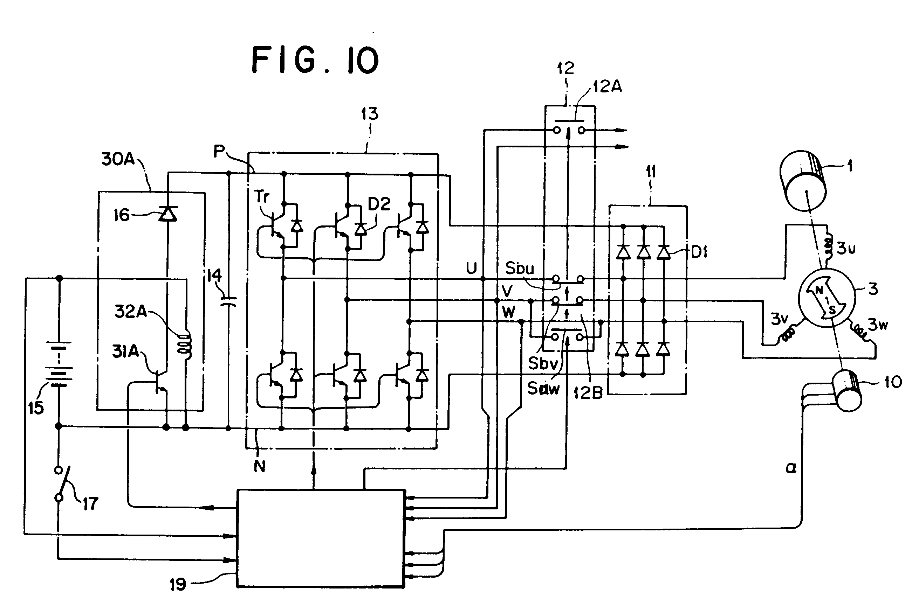

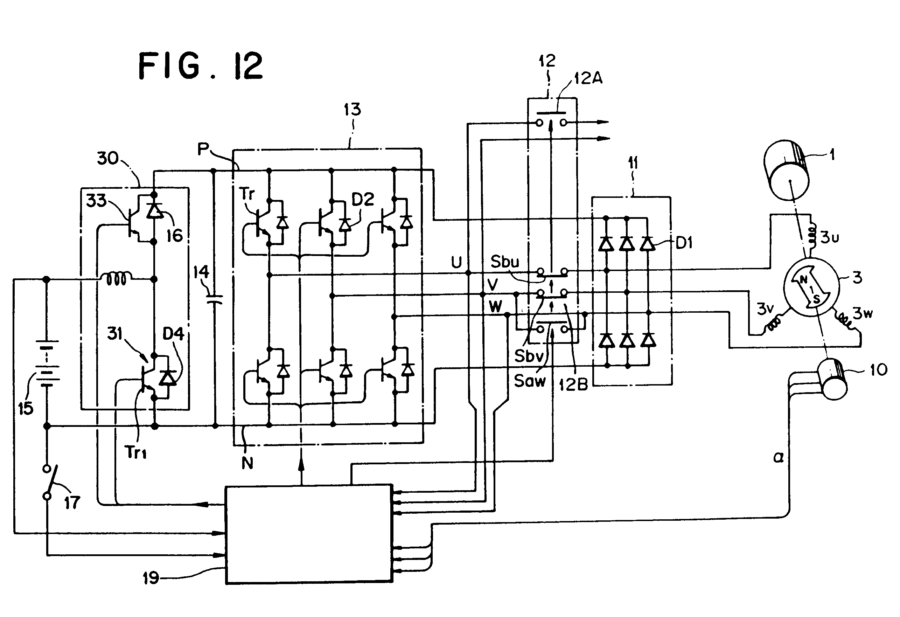

Third Embodiment (Figs. 10 and 11)

An engine driven generator according to the second embodiment of the present invention will described with reference to Figs. 10 and 11.

In the chopper circuit 30 for increasing the voltage inasmuch as the input voltage of the main circuit of the inverter 13 cannot be decreased under the voltage value of the direct current power supply 15 as illustrated in Fig. 9, the speed of rotation of the generator 3 is small when the generator 3 is just actuated so that an excessive current will flow through the main circuit of the inverter 13 when the speed induction voltage is low. To prevent the flowing of the excessive current, the chopper circuit 30A for increasing the voltage may be provided as illustrated in Fig. 10. The chopper circuit 30A comprises a chopper 31A (a transistor in this embodiment), reactor 32A, and a chopper controller (not shown) provided at the control circuit 19 for controlling the O N/OFF period where the direct current obtained by rectification of the output voltage of the main circuit of the inverter 13 is supplied to the chopper 31A as a feedback signal. The chopper circuit 30A decreases the voltage provided that the O N period of the transistor 31 is shortened, while the chopper circuit 30A increases the voltage provided that the ON period of the transistor 31 is prolonged. An operation characteristic of the chopper circuit 30A for increasing and decreasing the voltage is illustrated in Fig. 11, designated at Eo is the voltage of the direct current power supply 15, Ec is the voltage of the capacitor 14.

Fourth Embodiment (FIG. 12)

An engine driven generator according to a fourth embodiment of the present invention will be described to with referrence to Fig. 12.

The engine driven generator of the fourth embodiment is different from that of the second embodiment as illustrated in Fig. 8 in respect that the element 33 for charging the battery (a transistor in this embodiment). A charging controller is provided at the control circuit 19 (not shown) for controlling the transistor 33 to thereby supplying an ON signal from the charging controller at the time when the switching signal S is issued. There is provided a backflow prevention diode D4. The charging means or elements can be employed in the engine driven generator of the second embodiment. Each embodiment has the signal switching unit 26 having contacts but having gate logic switch actually mounted instead of contacts.

The control circuit 19 is illustrated as analog structure but may be digital structure. The operation of the main circuit of the inverter 13 can be executed by a software. The control system in each embodiment can be employed to an engine driven generator having a main circuit other than the main circuit of the inverter 13.

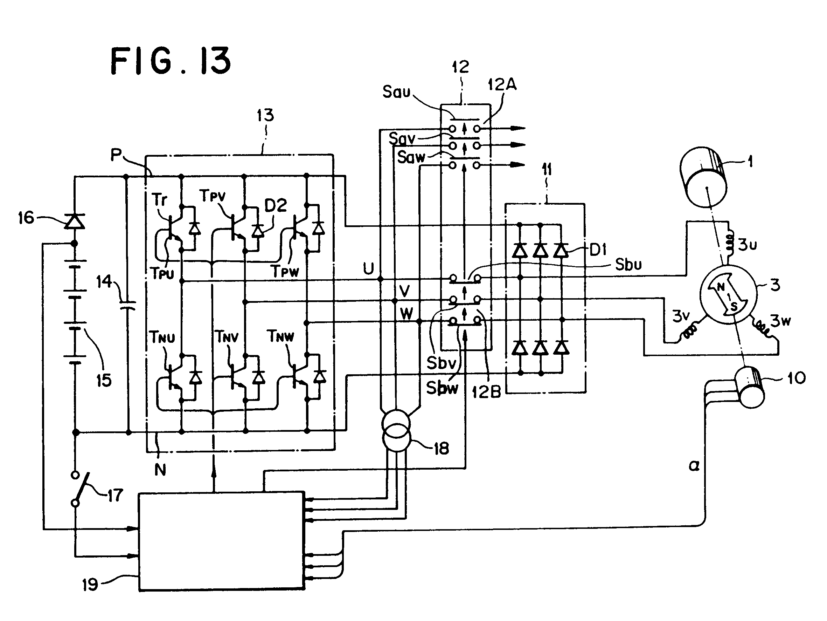

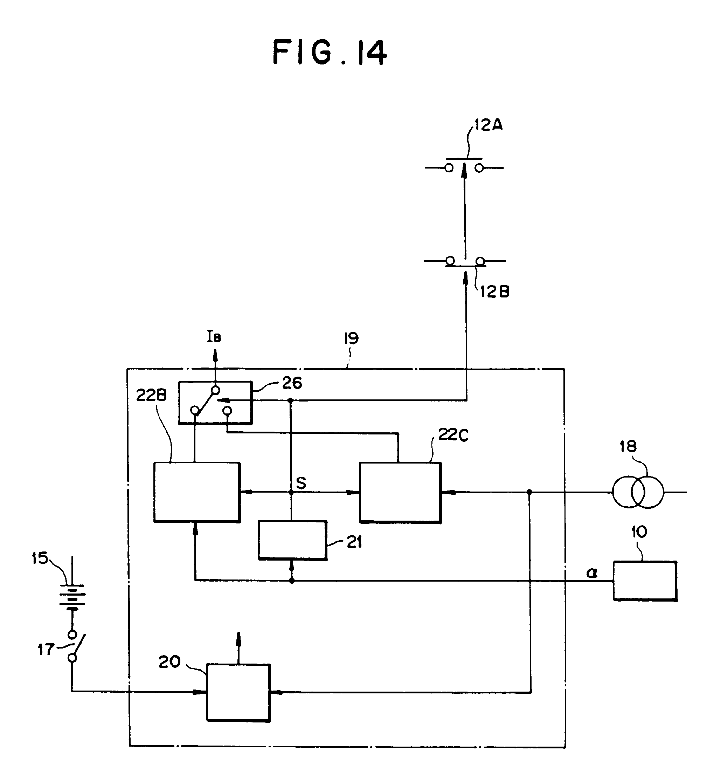

Fifth Embodiment (FIG. 13 to 14)

The generator 3 employed in the first embodiment is the three-phase synchronous generator and the main circuit of the inverter 13 is the three-phase inverter. However, the engine driven generator according to the fifth embodiment of the present invention can be used as the three-phase generator by changing the control system.

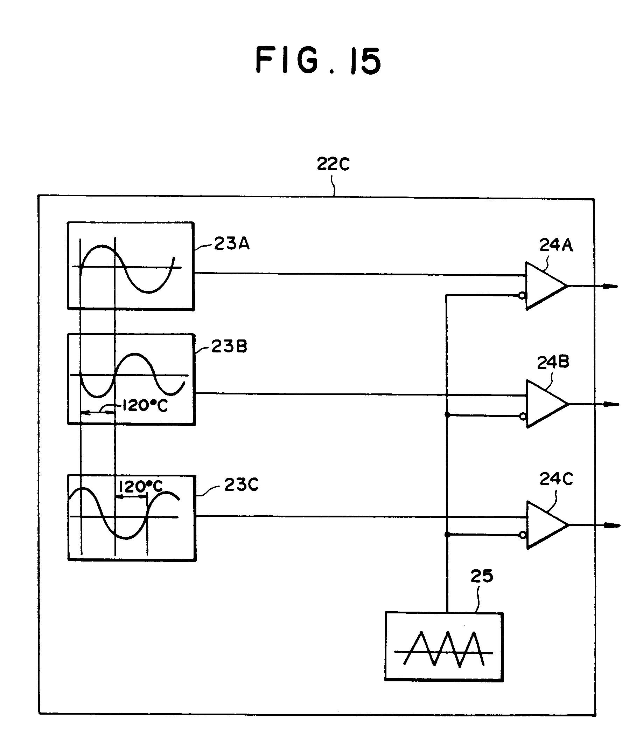

When using as the three-phase generator, the switching unit 12 of the first embodiment may be substituted by the three-phase switching unit as illustrated in Fig. 13 while the second drive unit 22A of the first embodiment may be substituted by a second drive unit 22C for producing a PMW signal for supplying to a U-phase driver 27u, V-phase driver 27v, W-phase driver 27w respectively of a driver unit 27. The contact 12A of the switching unit 12 has three normally open contacts Sau, Sav, Saw while the contact 12B has three normally closed contacts Sbu, Sbv, Sbw. Designated in Fig. 15 at 23u, 23v, 23w are respectively signal generators shifted for 120° in phase angle 24A, 24B, 24C are respectively comparators and 25 is a triangular wave generator. Designted at 18 is a transformer for feedbacking the output voltages U, V, W of the output terminals u, v, w to the control circuit 19.

With the arrangement of the engine driven generator accoring to the fourth embodiment of the present invention, the rotor position detector 10 and the main circuit of the inverter 13 operate corresponding to the brush and the armature of the direct current motor while three-phase synchronous generator 3 carries out the motor driving operation to actuate the engine 1. Actual completion of the actuation of the engine 1, the synchronous generator 3 carries out a generating operation and the alternating current output is converted by the main circuit of the inverter 13 to a stable three-phase alternating current power having a predetermined voltage with a predetermined frequency.

As is evident from the explanation, the engine driven generator according to the first to the fourth embodiments, a mere change of the switching unit 12 as well as change of the second drive unit of the control circuit 19 to thereby change the control system such as substitution of a printer circuit enables to be employed as the three-phase generator as well as the single-phase generator. Additionally, inasmuch as the bridge circuit composed of the transistor of the same capacity constituting the main circuit of the inverter 13 is general, and moduled and available with module and low cost, the engine driven generator can be mass-produced. Furthermore, the constituents excluding the engine the synchronous generator are very simple, the engine driven generator can be realized with low cost, light weight, and compact size.

The direct current power supply, namely, the direct current power supply having the chopper circuit 30 for increasing the voltage, the direct current power supply 30A for increasing and decreasing the voltage, the direct current power supply having the battery charging element 33 respectively illustrated in Figs. 8, 10, 12 can be employed to the engine driven generator of the fifth embodiment.

As explained in detail hereabove it is possible to provide the engine driven generator having no exclusive starter with simple construction so that the engine driven generator becomes small sized, compact with easy maintenace thereof. In the case where the single-phase alternating current is produced, one-phase of the switching element of the main circuit of the inverter for converting the output of the generator into the voltage having a predetermined voltage with a predetermined frequency is subjected to successively low frequency switching operation while the other two-phase switching elements are subjected to a high frequency switching operation alternately each half cycle whereby the main circuit can be operated with an optimum conversion efficiency at the motor driving operation of both the single-phase generator and the three-phase generator to thereby increase remarkably the single-phase alternating current capacity and to reduce the cost thereof.

## Claims

1. An engine driven generator having no exclusive starter comprising:
    an engine (1);
    a synchronous generator (3) having a rotor and coupled to a shaft of the engine (1);
    a rotor position detector for detecting the position of the rotor of the synchronous generator (3);
    a full-wave rectifier (11) connected to the output of the synchronous generator (3) for rectifying an alternating current wave of the output thereof;
    a main circuit of a direct current/alternating current power converter (13) (hereafter referred to as inverter) having switching elements and connectable to the output of the synchronous generator (3);
    a direct current power supply (15) connected to the main circuit of the inverter (13) for supplying the power to actuate the engine (1);
    a switching unit (12) composed of a first switch (12A) and a second switch (12B), the first switch (12A) capable of connecting the output of the main circuit of the inverter (13) for supplying the output thereof to a load while the second switch (12B) is capable of connecting the outputs of the main circuit of the inverter (13) with the output of the synchronous generator (3); and
    a control circuit (19) connectable to the direct current power supply (15) for switching the first and second switches (12A, 12B) and controlling the switching elements of the main circuit of the inverter (13);
    characterized in that
    the direct current power supply (15) has a semiconductor device (16) for preventing the current from flowing back,
    the full-wave rectifier (11) supplies rectified generator power to the dc input of the inverter (13);
    the first switch (12A) connects the ac load to the inverter (13) when the generator (3) performs power generation, and disconnects the load when the generator (3) performs motor driving operation; and
    the second switch (12A, 12B) is so controlled that the generator (3) is connected to the inverter (13) when the generator (3) is driven as motor, and disconnected from the inverter (13) when the generator (3) supplies three-phase ac power through the above mentioned full-wave rectifier (11) and the inverter (13) to the ac load.

2. An engine driven generator according to claim 1, wherein the generator (3) is a three-phase synchronous generator (3), which performs the power generating operation after completing the actuation of the engine (1), a pair of positive and negative first single-phase switching elements are subjected to successive ON/OFF control operation while one pair of two-phase switching elements and the other pair of two-phase switching elements are alternated for each half of the time and subjected to PWM control operation so that output terminals corresponding to the two-phase switching elements are short-circuited with each other;
    the connection point between the first pair of positive and negative switching elements is connected to one phase of an ac load;

a contact (Saw) of the second switch (12B) short-circuits the connection points of the other two pairs when the generator performs power generation; and

the thus connected connection points are connected to the other phase of the ac load.

3. An engine driven generator according to claim 2, wherein the pair of positive and negative first single-phase switching elements are driven by a square wave signal while the other each pair of two-phase switching elements are driven by a PWM signal which is derived from a half wave of a sine wave, and is alternated each half cycle.

4. An engine driven generator according to claims 1 through 3, wherein a direct current power supply (15) for actuating the engine (1) is a battery interposed between the direct current terminals of the main circuit of the inverter (13) via the switching element (17), the switching element (17) is not turned on while the engine is actuated.

5. An engine driven generator according to claims 1 through 4, wherein the direct current power supply (15) comprises a battery and a chopper for increasing the voltage of the battery.

6. An engine driven generator according to claims 1 through 4, wherein the direct current power supply (15) comprises a battery and a chopper for increasing and decreasing the voltage of the battery.

**Patentansprüche**

1. Ein von einem Motor angetriebener Generator ohne besonderen Starter, mit:
   - einem Motor (1);
   - einem Synchrongenerator (3) mit einem Rotor, der mit einer Welle des Motors (1) verbunden ist;
   - einem Rotorpositionsdetektor zum Erkennen der Position des Rotors des Synchrongenerators (3);
   - einem Ganzwellen-Gleichrichter (11), der mit dem Ausgang des Synchrongenerators (3) verbunden ist, um einen Wechselstrom dessen Ausgangs gleichzurichten;
   - einem mit Schaltelementen versehenen Hauptschaltkreis eines Gleichstrom-Wechselstrom-Leistungswandlers (13) (im folgenden als Inverter bezeichnet), der mit dem Ausgang des Synchrongenerators (3) verbunden werden kann;
   - einer Gleichstromleistungsquelle (15), die mit der Hauptschaltung des Inverters (13) verbunden ist, um die Leistung zum Anlassen des Motors (1) zu bereitzustellen;
   - einer Schalteinheit (12) bestehend aus einem ersten Schalter (12A) und einem zweiten Schalter (12B), wobei der erste Schalter (12A) dazu in der Lage ist, die Ausgabe der Hauptschaltung des Inverters (13) zu verbinden, um dessen Ausgabe einer Last zuzuführen, während der zweite Schalter (12B) dazu in der Lage ist, die Ausgaben der Hauptschaltung des Inverters (13) mit der Ausgabe des Synchrongenerators (3) zu verbinden; und
   - einer Steuerschaltung (19), die mit der Direktstromleistungsquelle (15) verbunden werden kann, um den ersten und den zweiten Schalter (12A, 12B) zu schalten und die Schaltelemente des Hauptschaltkreises des Inverters (13) zu steuern;
dadurch gekennzeichnet, daß
   - die Gleichstromleistungsquelle (15) eine Halbleitereinrichtung (16) zum Verhindern des Rückfließens des Stromes hat;
   - der Ganzwellen-Gleichrichter (11) die gleichgerichtete Generatorleistung an den Gleichspannungs-Eingang des Inverters (13) anlegt;
   - der erste Schalter (12A) die Wechselspannungslast an den Inverter (13) anlegt, wenn der Generator (3) die Leistungserzeugung ausführt und die Last abtrennt, wenn der Generator (13) den Betrieb zum Anlassen des Motors ausführt; und
   - der zweite Schalter (12B) derart gesteuert wird, daß der Generator (3) mit dem Inverter (13) verbunden ist, wenn der Generator (3) als Motor betrieben wird und er den Inverter (13) abtrennt, wenn der Generator (3) eine dreiphasige Wechselleistung durch den oben genannten Ganzwellen-Gleichrichter (11) und den Inverter (13) zu der Wechselspannungslast führt.

2. Ein von einem Motor angetriebener Generator nach Anspruch 1, wobei der Generator (3) ein dreiphasiger Synchrongenerator (3) ist, der nach Abschluß des Anlassens des Motors (1) den Leistungserzeugungsbetrieb ausführt, ein Paar von positiven und negativen ersten einphasigen Schaltelementen sukzessiven EIN/AUS-Steuervorgängen unterworfen sind, während ein Paar von zweiphasigen Schaltelementen und das andere Paar von einphasigen Schaltelementen gewechselt werden für jede Hälfte der Zeit und dem PWM-Steuerbetrieb unterworfen sind, so daß die Ausgangsanschlüsse entsprechend den zweiphasigen Schaltelementen miteinander kurzgeschlossen sind;

- der Verbindungspunkt zwischen dem ersten Paar von positiven und negativen Schaltelementen mit einer Phase einer Wechselspannungslast verbunden ist;
- ein Kontakt (Saw) des zweiten Schalters (12B) der die Verbindungspunkte des anderen Paares kurzschließt, wenn der Generator die Leistungserzeugung ausführt; und
- die derart verbundenen Verbindungspunkte mit der anderen Phase der Wechselspannungslast verbunden sind.

3. Ein von einem Motor angetriebener Generator nach Anspruch 2, wobei das Paar von positiven und negativen ersten einphasigen Schaltelementen durch ein rechteckiges Wellensignal angetrieben wird, während das andere Paar der beiden zweiphasigen Schaltelemente durch ein PWM-Signal angetrieben wird, das von einer Halbwelle einer Sinuswelle abgeleitet wird und mit jedem Halbzyklus gewechselt wird.

4. Ein von einem Motor angetriebener Generator nach einem der Ansprüche 1 bis 3, wobei eine Gleichstromleistungsquelle (15) zum Anlassen des Motors (1) eine Batterie ist, die zwischen den Gleichstromanschlüssen der Hauptschaltung des Inverters (13) über das Schaltelement (17) angeordnet ist, wobei das Schaltelement (17) nicht eingeschaltet wird, während der Motor angelassen wird.

5. Ein von einem Motor angetriebener Generator nach einem der Ansprüche 1 bis 4, wobei die Gleichstromleistungsquelle (15) eine Batterie und einer Chopper zum Erhöhen der Spannung der Batterie aufweist.

6. Ein von einem Motor angetriebener Generator nach einem der Ansprüche 1 bis 4, wobei die Gleichstromleistungsquelle (15) eine Batterie und einen Chopper zum Erhöhen und Absenken der Spannung der Batterie aufweist.

## Revendications

1. Générateur entraîné par un moteur n'ayant pas de démarreur exclusif comprenant :

un moteur (1) ;

un générateur synchrone (3) muni d'un rotor et couplé à un arbre du moteur (1) ;

un détecteur de position du rotor, pour détecter la position du rotor du générateur synchrone (3) ;

un redresseur pleine onde (11) connecté à la sortie du générateur synchrone (3) pour redresser une onde de courant alternatif sortant de celui-ci ;

un circuit principal d'un convertisseur continu-alternatif (13) appelé ci-après onduleur comprenant des éléments de commutation et pouvant être connecté à la sortie du générateur synchrone (3) ;

une source de puissance en courant continu (15) connectée au circuit principal de l'onduleur (13), qui fournit la puissance d'activation du moteur (1) ;

une unité de commutation (12) composée d'un premier commutateur (12A) et d'un second commutateur (12B), le premier commutateur (12A) pouvant relier la sortie du circuit principal de l'onduleur (13) à une charge, le second commutateur (12B) pouvant relier les sorties du circuit principal de l'onduleur (13) à la sortie du générateur synchrone (3) ; et

un circuit de commande (19) pouvant être connecté à la source de puissance en courant continu (15), pour actionner les premier et second commutateurs (12A,12B) et commander les éléments de commutation du circuit principal de l'onduleur (13) ;

caractérisé par le fait que :

la source de puissance en courant continu (15) est munie d'un dispositif semi-conducteur (16) pour empêcher le courant de passer dans le sens contraire ;

le redresseur pleine onde (11) fournit la puissance du générateur redressée à l'entrée en courant continu de l'onduleur (13) ;

le premier commutateur (12A) connecte la charge en courant alternatif à l'onduleur (13) quand le générateur (3) est en phase de génération de puissance, et déconnecte la charge quand le générateur (3) est en phase d'entraînement du moteur ; et

le second commutateur (12B) est commandé de manière à ce que le générateur (3) soit connecté à l'onduleur (13) quand le générateur (3) est entraîné en moteur, et déconnecté de l'onduleur (13) quand le générateur (3) fournit de la puissance en courant alternatif triphasé, par l'intermédiaire du redresseur pleine onde (11) et de l'onduleur (13) précédemment mentionnés, à la charge en courant alternatif.

2. Générateur entraîné par un moteur selon la revendication 1, dans lequel le générateur (3) est un générateur synchrone triphasé qui réalise l'opération de génération de puissance après achèvement de l'activation du moteur (1), une paire de premiers éléments de commutation monophasés positif et négatif sont soumis à des opérations de commande MARCHE/ARRET, pendant que l'une et l'autre paire d'éléments de commutation biphasés fonctionnent alternativement pendant chaque demi-période et sont soumis à des opérations de commande PWM, de manière à ce que les bornes de sortie correspondant aux éléments de commutation biphasés soient court-circuitées l'une avec l'autre ;

le point de connexion entre la première paire d'éléments de commutation positif et négatif est relié à l'une des phases d'une charge en courant alternatif,

un contact (Saw) du second commutateur (12B) court-circuite les points de connexion des deux autres paires quand le générateur est en phase de génération, et

les points de connexion ainsi connectés sont reliés à l'autre phase de la charge en courant alternatif.

3. Générateur entraîné par un moteur selon la revendication 2, dans lequel la paire de premiers éléments de commutation monophasés positif et négatif est commandée par un signal d'onde carrée alors que chaque autre paire d'éléments de commutation biphasés est commandée par un signal PWM issu d'une moité d'onde sinusoïdale, et change de sens à chaque demi période.

4. Générateur entraîné par un moteur selon les revendications 1 à 3, dans lequel la source de puissance en courant continu (15) qui active le moteur (1) est une batterie interposée entre les bornes de courant continu du circuit principal de l'onduleur (13) via l'interrupteur (17), l'interrupteur (17) n'étant pas fermé lorsque que le moteur est actionné.

5. Générateur entraîné par un moteur selon les revendications 1à 4, dans lequel la source de puissance en courant continu (15) comprend une batterie et un variateur pour augmenter la tension de la batterie.

6. Générateur entraîné par un moteur selon les revendications 1 à 4, dans lequel la source de puissance en courant continu (15) comprend une batterie et un circuit à découpage pour augmenter et diminuer la tension de la batterie.

FIG. I

# FIG. 2

# FIG. 3

# FIG. 4

# FIG. 5

# FIG. 6

EP 0 338 512 B1

# FIG. 7

OPERATION
OF U-PHASE

|←V-PHASE→|←W-PHASE→|←V-PHASE→|←W-PHASE→|

FIG. 8

EP 0 338 512 B1

# FIG. 9

# FIG. II

# FIG. 10

EP 0 338 512 B1

FIG. 12

# FIG. 13

## FIG.14

# FIG. 15